(19) Europäisches Patentamt
European Patent Office
Office européen des brevets

(11) Veröffentlichungsnummer: **0 433 220 B1**

(12) **EUROPÄISCHE PATENTSCHRIFT**

(45) Veröffentlichungstag der Patentschrift: **25.01.95**

(51) Int. Cl.[6]: **C09B 47/067**, G11B 7/24

(21) Anmeldenummer: **90810875.6**

(22) Anmeldetag: **13.11.90**

(54) **Substituierte Naphthalocyanine und deren Verwendung.**

(30) Priorität: **22.11.89 CH 4184/89**

(43) Veröffentlichungstag der Anmeldung:
**19.06.91 Patentblatt 91/25**

(45) Bekanntmachung des Hinweises auf die Patenterteilung:
**25.01.95 Patentblatt 95/04**

(84) Benannte Vertragsstaaten:
**BE CH DE FR GB IT LI NL SE**

(56) Entgegenhaltungen:
**EP-A- 0 279 426**
**DE-A- 3 622 590**
**GB-A- 2 168 372**
**GB-A- 2 200 650**

(73) Patentinhaber: **CIBA-GEIGY AG**
**Klybeckstrasse 141**
**CH-4002 Basel (CH)**

(72) Erfinder: **Baumann, Marcus, Dr.**
**Arlesheimerstrasse 18**
**CH-4053 Basel (CH)**
Erfinder: **Stricker, Hanspeter**
**Mittlere Strasse 28**
**CH-4056 Basel (CH)**
Erfinder: **Fischer, Walter, Dr.**
**Vogesenstrasse 77**
**CH-4153 Reinach (CH)**
Erfinder: **Vogt, Jürgen, Dr.**
**Kleinschönberg 34**
**CH-1700 Fribourg (CH)**
Erfinder: **Mizuguchi, Jin, Dr.**
**Rte de Schiffenen 7**
**CH-1700 Fribourg (CH)**

**EP 0 433 220 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft in 1,4-Stellung mit Polyoxyalkylengruppen substituierte Tetra-(2,3-naphtho)-tetraazaporphine (Polyoxaalkylennaphthalocyanine),ein Verfahren zu deren Herstellung, eine Zusammensetzung aus einem Substrat und einer erfindungsgemässen Verbindung, und die Verwendung der Zusammensetzung als optisches Informationsaufzeichnungsmaterial.

In der GB-A-2 168 372 sind Octaalkoxyphthalocyanine und -naphthalocyanine beschrieben und in der GB-A-2 200 650 entsprechende Metallsalze. Die offenbarten Verbindungen können in Flüssigkristallen gelöst werden und in elektrooptischen Anzeigesystemen verwendet werden. Im J. Chem. Soc. Perkin Trans. I, S. 2453-2458 (1988) beschreiben M.J. Cook et al. Octaalkoxynaphthalocyanine und entsprechende Kupfersalze. Die Farbstoffe absorbieren Strahlung im nahen Infrarotbereich und sie können zur Laserbeschriftung oder für Bildprojektionen mit IR-Lasern verwendet werden.

Ein Gegenstand vorliegender Erfindung sind Verbindungen der Formel I

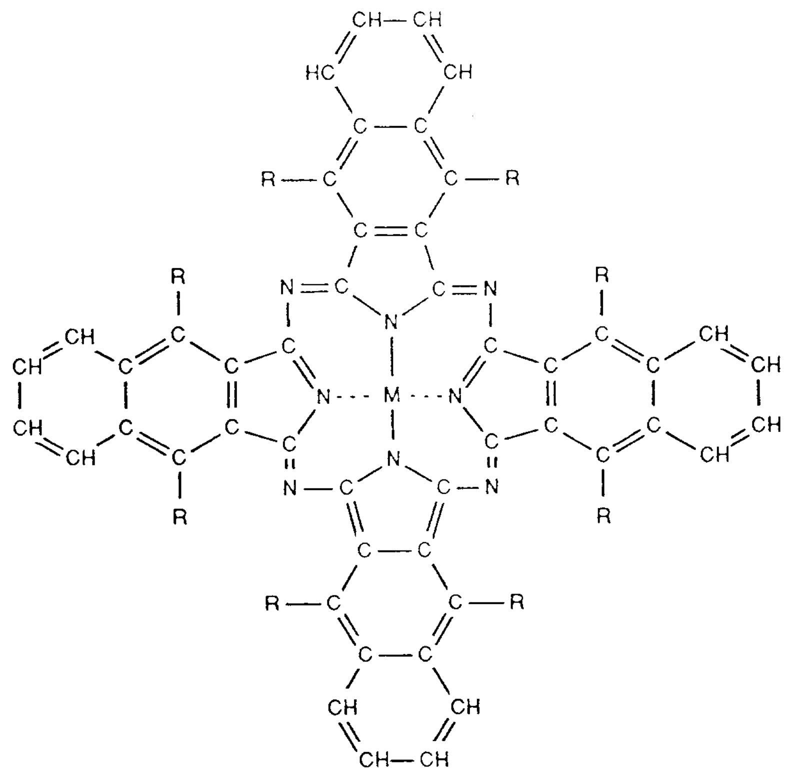

(I),

worin
R die Gruppe

$$-(OC_mH_{2m})_n-R_1$$

darstellt und M für zwei H oder für Cu oder Ni steht, $R_1$-OH, -Cl, -Br, $C_1$-$C_{30}$-Alkoxy oder -OC(O)$R_2$ bedeutet, m für eine ganze Zahl von 2 bis 6 und n für eine Zahl von 1 bis 20 stehen, und $R_2$ $C_1$-$C_{20}$-Alkyl, $C_2$-$C_{20}$-Alkenyl, Cyclopentyl, Cyclohexyl, unsubstituiertes oder mit $C_1$-$C_{18}$-Alkyl substituiertes $C_6$-$C_{10}$-Aryl oder $C_6$-$C_{10}$-Arylmethyl ist.

In Formel I steht M bevorzugt für Ni.

In der Gruppe

$$-(OC_mH_{2m})_n-R_1$$

steht m bevorzugt für ganze Zahlen von 2 bis 4, besonders 2 oder 3, und n steht bevorzugt für 1 bis 10, besonders 1 bis 5.

Bei der Gruppe $-C_mH_{2m}-$ kann es sich z.B. um Ethylen, 1,2- oder 1,4-Propylen, 1,2-, 1,3-, 1,4- oder 2,3-Butylen, 1,2-, 1,3-, 1,4-, 1,5- oder 2,3-Pentylen und 1,2-, 1,3-, 1,4-, 1,5-, 2,3- oder 3,4-Hexylen handeln. Bevorzugt sind 1,2- oder 1,3-Propylen und besonders Ethylen.

Eine bevorzugte Ausführungsform sind Verbindungen der Formel I, worin R die Gruppe

$$-(OCH_2-CH_2)_m-R_1$$

bedeutet, worin m für eine ganze Zahl von 1 bis 20 steht und $R_1$ die zuvor angegebenen Bedeutungen hat.

$R_1$ enthält als Alkoxy bevorzugt 1 bis 18, besonders 1 bis 12 und insbesondere 1 bis 6 C-Atome. Beispiele sind Methyloxy, Ethyloxy und die Isomeren von Propyloxy, Butyloxy, Pentyloxy, Hexyloxy, Heptyloxy, Octyloxy, Nonyloxy, Decyloxy, Undecyloxy, Dodecyloxy, Tridecyloxy, Tetradecyloxy, Pentadecyloxy, Hexadecyloxy, Heptadecyloxy, Octadecyloxy, Nonadecyloxy und Eicosyloxy. $R_1$ kann als Alkoxy linear oder verzweigt sein.

$R_2$ in der Bedeutung von Alkyl kann linear oder verzweigt sein und bevorzugt 1 bis 18, besonders 1 bis 12 und insbesondere 1 bis 6 C-Atome enthalten. Geeignete Alkylgruppen sind z.B. Methyl, Ethyl und die Isomeren von Propyl, Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl, Octadecyl, Nonadecyl und Eicosyl.

$R_2$ in der Bedeutung von Alkenyl kann linear oder verzweigt sein und bevorzugt 2 bis 18, besonders 2 bis 12 und insbesondere 2 bis 6 C-Atome enthalten. Beispiele sind Allyl, Butenyl, Pentenyl, Hexenyl, Heptenyl, Octenyl, Decenyl, Dodecenyl, Tetradecenyl, Hexadecenyl und Octadecenyl.

$R_2$ ist in der Bedeutung von Aryl bevorzugt Naphthyl und besonders Phenyl, und als Arylmethyl bevorzugt Benzyl. Als Substituent für Aryl und Arylmethyl kann das Alkyl linear oder verzweigt sein und bevorzugt 1 bis 12, besonders 1 bis 6 C-Atome enthalten. Einige Beispiele sind Methyl-, Ethyl-, Dimethyl-, n- oder i-Propyl-, n- oder t-Butyl-, Hexyl-, Octyl-, Decyl- oder Dodecylphenyl oder -benzyl.

Eine bevorzugte Untergruppe sind solche Verbindungen der Formel I, worin $R_1$ -OH, $C_1$-$C_{18}$-Alkoxy oder $-OC(O)-R_2$ bedeutet, und $R_2$ $C_1$-$C_{18}$-Alkyl, Phenyl, Benzyl, $C_1$-$C_{12}$-Alkylphenyl oder $C_1$-$C_{12}$-Alkylbenzyl darstellt. Besonders bevorzugt stellen $R_1$-OH oder $C_1$-$C_{12}$-Alkoxy und $R_2$ $C_1$-$C_{12}$-Alkyl dar.

Eine weitere bevorzugte Untergruppe sind Verbindungen der Formel I, worin R die Gruppe

$$-(OCH_2-CH_2)_n-R_1$$

bedeutet, worin n eine Zahl von 1 bis 5 ist und $R_1$ für $C_1$-$C_{12}$-Alkoxy steht. Besonders bevorzugt stehen n für eine Zahl von 1 bis 3 und $R_1$ für $C_1$-$C_4$-Alkoxy.

Ein weiterer Gegenstand ist ein Verfahren zur Herstellung von Verbindungen der Formel I bei dem man

a) eine Verbindung der Formel II

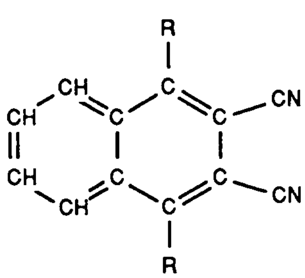

(II),

worin R die zuvor angegebenen Bedeutungen hat, bei erhöhter Temperatur in einem Lösungsmittel RH und in Gegenwart einer mindestens äquimolaren Menge eines Lithiumsalzes LiR umsetzt, danach durch Hydrolyse die Verbindung der Formel I freisetzt, worin M für zwei H steht, und diese Verbindung der Formel I isoliert, und gegebenenfalls

b) die nach Stufe a) hergestellte Verbindung in Gegenwart eines Lösungsmittels mit einer mindestens äquimolaren Menge eines Metallsalzes $MX_2$ umsetzt, wobei M für Cu oder Ni steht und X das Anion einer monobasischen Säure ist.

Die Verbindungen der Formel II sind neu und ebenfalls ein Gegenstand der Erfindung. Sie können in einfacher Weise durch die Umsetzung von 1 Aequivalent 1,4-Dihydroxy-2,3-dicyanonaphthalin mit 2

Aequivalenten p-Toluolsulfonsäureester der Formel

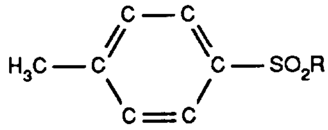

bei Temperaturen von zweckmässig 40 bis 150 °C in Gegenwart eines Lösungsmittels (z.B. Dimethylformamid) und eines Alkalimetallcarbonats (z.B. $K_2CO_3$) erhalten werden, wobei R die für Formel I angegebenen Bedeutungen hat.

Das erfindungsgemässe Verfahren wird zweckmässig bei einer Temperatur von mindestens 100 °C, bevorzugt 100-200 °C durchgeführt. Zur Vermeidung von Nebenreaktionen verwendet man als Lösungsmittel solche der Formel RH und als Lithiumsalze solche der Formel LiR. Die Lithiumsalze werden z.B. erhalten, indem man zu einem Ueberschuss an Lösungsmittel RH Lithium gibt und man danach ausreagieren lässt. Vorteilhaft verwendet man einem Ueberschuss an Lithiumsalzen LiR. Zu der Lösung der Lithiumsalze gibt man dann die Verbindung der Formel II und erwärmt das Gemisch. Danach lässt man das Reaktionsgemisch abkühlen und hydrolisiert zweckmässig mit einer Säure, z.B. Essigsäure. Die Isolierung der erfindungsgemässen Verbindungen, worin in Formel I M für zwei H steht, kann dann in bekannter Weise mittels Extraktion, Kristallisation und chromatographischen Methoden erfolgen.

Bei der Durchführung der Verfahrensstufe b) löst man die nach der Verfahrensstufe a) erhaltenen Verbindungen zweckmässig in einem polaren Lösungsmittel, z.B. Alkanolen (z.B. Methanol, Ethanol, n- oder i-Propanol, n- oder t-Butanol, Pentanol, Hexanol, Heptanol, Octanol), halogenierten Kohlenwasserstoffen (z.B. $CH_2Cl_2$, $CHCl_3$, 1,1,1-Trichlorethan, 1,1,2,2-Tetrachlorethan) oder Ethern (z.B. Diethylether, Di-n-butylether, Tetrahydrofuran, Dioxan). Die Umsetzung mit einem Metallsalz $MX_2$ kann z.B. bei 10 bis 150 °C, vorzugsweise 20 bis 80 °C erfolgen. Bei X kann es sich vorzugsweise um Cl, Br, Acetat oder Acetylacetonat handeln. Die gebildeten Metallsalze der Formel I können in üblicher Weise durch Kristallisation oder chromatographische Methoden gereinigt werden.

Die erfindungsgemässen Verbindungen sind braune Festsubstanzen, die ein Absorptionsmaximum im Nah-IR-Bereich (nachfolgend NIR abgekürzt) bei etwa 850 nm und ein Absorptionsminimum (Fenster) bei etwa 780 nm aufweisen. Sie sind thermisch stabil und löslich, besonders in polaren und unpolaren Substraten wie z.B. Lösungsmitteln, Flüssigkristallen und Kunststoffen. Die Löslichkeit kann ein vielfaches der Löslichkeit vorbekannter Verbindungen mit Alkoxygruppen betragen.

Diese Eigenschaft ist besonders vorteilhaft für opto-elektronische Anwendungen wie z.B. Informationsspeicherungen, weil die erfindungsgemässen Verbindungen wegen der hohen Löslichkeit sowie wegen der guten Licht- und Temperaturbeständigkeit über einen längeren Zeitraum leicht in Kunststoffe eingearbeitet werden können.

Die erfindungsgemässen Verbindungen können weiter als NIR-Absorber sowohl für nichtlöschbare als auch für löschbare Informationsspeichersysteme unter Verwendung der preiswerten und handlichen NIR-Laserdioden eingesetzt werden.

Ein nichtlöschbares System beruht auf der Ablationsbildung durch Markierung mit Laserstrahlung. Diese Technik ist in der Literatur (Angewandte Chemie, Vol. 101, Seite 1475-1502 (1989)) beschrieben. Auf einer Unterlage aus einem Kunststoff wie z.B. Polycarbonat oder Polymethylmethacrylat, oder aus einem Glas wird eine Aufzeichnungspolymerschichtaufgebracht, in der einer der erfindungsgemässen NIR-Farbstoffe gelöst ist. Man schreibt punktweise Informationen unter Verwendung einer Laserdiode von z.B. 830 nm und liest die gespeicherte Information anhand der Transmissions- oder Reflexionsänderung wieder aus.

Die erfindungsgemässen NIR-Farbstoffe können auch für ein anderes nichtlöschbares System auf Basis der viskoelastischen Eigenschaften von Polymeren angewendet werden.

Die Farbstoffschicht wird direkt auf einer Kunststoffunterlage (z.B. Polycarbonat) aufgetragen, deren Glasumwandlungstemperatur bei etwa 100-160 °C liegt. Darauf bringt man eine reflektierende Metallschicht aus z.B. Aluminium oder Gold auf. Als Glas- oder Kunststoff-Unterlage können auch solche verwendet werden, die den erfindungsgemässen NIR-Farbstoff in einem Polymer gelöst enthalten, dessen Glasumwandlungstemperatur bei etwa 100-160 °C liegt. Solche Systeme sind z.B. in SPIE Vol. 1078 "Optical Data Storage Topic Meeting" (1989), Seite 80-87 beschrieben. Infolge Markierung z.B. mit einer Laserdiode von 830 nm erfolgt eine lokale Ausdehnung des belichteten Punktes, was eine Transmissions- oder Reflexionsänderung zur Folge hat.

Weiter können die erfindungsgemässen Verbindungen auch als NIR-Absorber für ein löschbares System basierend auf dem viskoelastischen Eigenschaften von Polymeren benutzt werden. Bei diesem System verwendet man eine Doppelschicht, die aus einer Ausdehnungsschicht und einer plastisch deformierbaren Retentionsschicht besteht. In der Ausdehnungsschicht kann ein Elastomer eines vernetzten Polymers wie z.B. Polyurethane oder Epoxyharze verwendet werden, deren Glasumwandlungstemperatur bei etwa 25 °C liegt. Diese Schicht enthalt einen Farbstoff wie z.B. Phthalocyanin-Derivate, die z.B. bei etwa 690 nm eine starke Absorption besitzen. Für die Retentionsschicht können hoch vernetzte Polymere auf thermoplastischer Basis wie z.B. Polyester, Epoxyharze oder Polycarbonate eingesetzt werden, welche eine Glasumwandlungstemperatur von etwa 100-160 °C besitzen. Diese Schicht enthält mindestens einen der erfindungsgemässen NIR-Farbstoffe. Ein solches System ist z.B. in der EP-A-0 262 960 beschrieben. Als Unterlage können Kunststoffe wie Polycarbonate oder Polymethylmethacrylat, oder auch Gläser verwendet werden. Die Farbstoffkonzentration in den beiden Schichten liegt zwischen etwa 0,001 und 10 Gew.-%, vorzugsweise zwischen etwa 0,01 und 3 Gew.-%. Die Aufzeichnungsdoppelschicht kann z.B. mit der Schleuderbeschichtungstechnik auf die Unterlage aufgebracht werden, wobei jede Schichtdicke bevorzugt unter 1 µm beträgt. Gegebenenfalls kann auch eine reflektierende Metallschicht aufgedampft werden. Man schreibt punktweise Informationen unter Verwendung eines Farbstofflasers von z.B. 690 nm, was zuerst eine lokale Ausdehnung in der Ausdehnungsschicht bewirkt und schliesslich zu einer viskoelastischen Deformation in der Retentionsschicht führt. Infolgedessen ändert sich die Transmission oder Reflexion der beschriebenen Punkte, was man mit einer Laserdiode von z.B. 780 nm erkennen kann. Die geschriebene Information kann entweder mit einem Laser punktweise oder mit einem Blitzlicht integral gelöscht werden.

Ein weiterer Gegenstand der Erfindung ist eine Zusammensetzung, enthaltend

a) ein Substrat und

b) in gleichmässiger Verteilung oder auf mindestens einer Oberfläche mindestens eine Verbindung der Formel I.

Bevorzugt sind die Verbindungen der Formel I in einer Menge von 0,001 bis 10 Gew.-%, besonders 0,01 bis 5 Gew.-% enthalten, bezogen auf das Substrat.

Substrate, in die die Verbindungen der Formel I eingearbeitet werden, sind bevorzugt transparent. Bevorzugt handelt es sich bei dem Substrat um einen Kunststoff.

Der Kunststoff kann z.B. ein Duroplast, ein Thermoplast oder ein strukturell vernetztes Polymer sein. Solche Polymere sind dem Fachmann geläufig.

Ein weiterer Gegenstand der Erfindung ist die Verwendung der erfindungsgemässen Zusammensetzung als optisches Informationsaufzeichnungsmaterial durch Markierung mit Lasern.

Die nachfolgenden Beispiele erläutern die Erfindung näher.

A) Herstellung von Ausgangsverbindungen

Beispiele A1-A5:

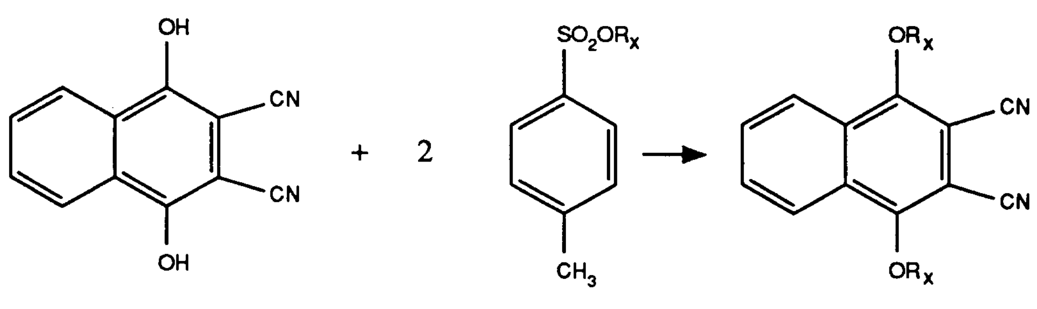

Eine Mischung aus 0,12 Mol 1,4-Dihydroxy-2,4-dicyanonaphthalin, 0,29 Mol 1-(p-Tolylsulfonyloxy)-ester, 0,55 Mol $K_2CO_3$ und 480 ml DMF wird unter $N_2$-Atmosphäre und Rühren 2 Stunden auf 85 °C erwärmt. Nach dem Abkühlen wird der Niederschlag abfiltriert und das Filtrat im Vakuum zur Trockne eingedampft. Der Rückstand wird in einem 1:1-Gemisch aus Essigsäureethylester:Diethylether gelöst und mit 1N NaOH, 1N HCl und $H_2O$ gewaschen. Nach dem Trocknen über $Na_2SO_4$ und Abdampfen des Lösungsmittels werden 37,9 g dunkles Oel erhalten, welches aus Methanol kristallisiert wird. Weitere Angaben befinden sich in Tabelle 1.

Tabelle 1:

| Beispiel | $R_x$ | Schmelzpunkt [°C] | Ausbeute [%] | Bemerkung |
|---|---|---|---|---|
| A1 | 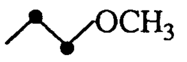 | 102-103 | 60,2 | |
| A2 | 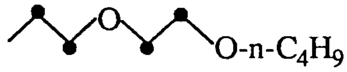 | - | 53,3 | a), b) |
| A3 | 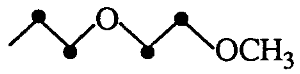 | 50-51 | 43,6 | c) |
| A4 | 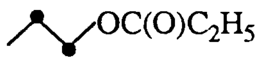 | 118-120 | 1,0 | d) |
| A5 | 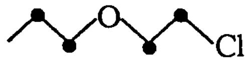 | 54-56 | 35,2 | c) |

a) Chromatographiert, Kieselgel/$CH_2Cl_2$:$CH_3OH$ (98:2).

b) NMR ($CHCl_3$): 8,42 (m, 2H, Arom.); 7,77 (m, 2H, Arom.); 4,6 (m, 4H $(CH_2)_2$); 3,97 (m, 4H $(CH_2)_2$); 3,72 (m, 4H $(CH_2)_2$); 3,6 (m, 4H $(CH_2)_2$); 3,48 (t, 4H $(CH_2)_2$); 1,59 (m, 4H $(CH_2)_2$); 1,34 (m, 4H $(CH_2)_2$) und 0,9 ppm (t, 6H $(CH_3)_2$).

c) Kristallisiert aus Diethylether

d) Flashchromatographiert, $CH_2Cl_2$ + Essigsäureethylester (1; 5 und 10 %)

B) Herstellung von Naphthalocyaninen

Beispiel B1: R = $-OCH_2CH_2OCH_3$, M = 2 H (R und M beziehen sich auf Formel I).

Zu 250 ml Ethylenglykolmonomethylether werden innert einer Stunde portionsweise unter Rühren, Kühlen und $N_2$-Atmosphäre 4,9 g (0,7 Mol) Lithium eingetragen. Anschliessend wird 30 Minuten bei Raumtemperatur gerührt. Zu dieser Lösung werden 22,7 g (0,07 Mol) 1,4-Bis(2-methoxy-ethoxy)-2,4-dicyanonaphthalin gegeben und 2 Stunden am Rückfluss (125 °C) erhitzt. Nach dem Abkühlen werden unter Eiskühlung 210 ml Essigsäure zugetropft. Das Gemisch wird anschliessend im Vakuum zur Trockne eingedampft. Der Rückstand wird in Methylenchlorid gelöst und 2 mal mit 2N HCl und 2 mal mit 10-prozentiger NaCl-Lösung gewaschen. Nach dem Trocknen über $Na_2SO_4$ und Abdampfen des Lösungsmittels werden 20 g schwarzes Oel erhalten, welches aus 30 ml Essigsäureethylester kristallisiert wird. Auf dies Weise wird 9,5 g (42 %) Naphthalocyanin als bräunliche, feine Nadeln vom Schmelzpunkt >280 °C erhalten. Aus der Mutterlauge werden weitere 2 g (9 %) durch Chromatographie über Kieselgel mit Methylenchlorid:Methanol (99:1) isoliert.

NMR ($CHCl_3$): 9,1 (m, 8H, Arom.); 7,9 (m, 8H, Arom.); 5,37 (t, 16H, $CH_2$); 4,05 (t, 16H, $CH_2$) und 3,5 ppm (s, 24H, $CH_3$).

UV ($CHCl_3$): $\lambda$max 856 nm/$\epsilon$ = 251500, $\lambda$min 784 nm/$\epsilon$ = 32000 ("Fenster").

MS (FAB): $M^{\oplus}$ 1307.

Analog werden hergestellt unter Verwendung der entsprechenden Alkoxydiethylenglykole und Lithiumsalze:

Tabelle 2

| Beispiel | R | M | Massenspektrum [$M^{\oplus}$] | Schmelzpunkt [°C] | λmax/ε | λmin/ε ("Fenster") |
|---|---|---|---|---|---|---|
| B2 | $(OCH_2CH_2)_2OCH_3$ | 2H | 1659 | 131-133 | 858 nm/166560 | 785 nm/20000 |
| B3 | $(OCH_2CH_2)_2O$-n-$C_4H_9$ | 2H | 1995 | 60-62 | 858 nm/216800 | 783 nm/25000 |

Beispiel B4: R = $CH_3OCH_2CH_2O$-, M = Ni.

Eine Mischung aus 262 mg (0,2 mMol) Verbindung gemäss Beispiel B1, 103 mg (0,4 mMol) Nickel-Acetylacetonat und 20 ml Methylenchlorid werden über Nacht bei Raumtemperatur gerührt. Anschliessend wird über 30 g Kieselgel mit 500 ml Methylenchlorid:Methanol (98:2) chromatographiert. Es werden Eluate von je 20 ml abgetrennt. Die Eluate 7-13 werden zusammengenommen und das Losungsmittel im Vakuum abgedampft. Der Rückstand wird bei 80°C im Vakuum getrocknet. Auf diese Weise werden 109 mg (40 %) Titelverbindung vom Smp. >280°C als braunes Pulver erhalten.

| Mikro-Analyse (berechnet auf $C_{72}H_{72}N_8O_{16}Ni$, MG 1364,12): | | | | |
|---|---|---|---|---|
| Berechnet: | C: 63,4 %; | H: 5,3 %; | N: 8,2 %; | Ni: 4,3 %. |
| Gefunden: | C: 63,7 %; | H: 5,5 %; | N: 8,2 %; | Ni: 4,4 %. |

MS (FAB): $M^{\oplus}$ 1362.
UV ($CHCl_3$): λmax 841 nm/ε = 278300; λmin 772 nm/ε = 27000 ("Fenster").

Beispiel B5: R = $CH_3OCH_2CH_2O$-, M = Cu

Der analog Beispiel B4 unter Verwendung von Kupfer-Acetylacetonat hergestellte Cu-Komplex bildet Mischkristalle mit einem Mol Kupferacetylacetonat.
Ausbeute 44%, Smp. >280°C.

| Mikro-Analyse (berechnet auf $C_{72}H_{72}N_8O_{16}Cu \bullet C_{10}H_{14}O_4Cu$, MG: 1630,7): | | | | |
|---|---|---|---|---|
| Berechnet: | C: 60,4 %; | H: 5,3 %; | N: 6,9 %; | Cu: 7,8 %. |
| Gefunden: | C: 60,8 %; | H: 5,4 %; | N: 6,9 %; | Cu: 7,8 %. |

MS (FAB): $M^{\oplus}$ 1368.
UV-VIS ($CHCl_3$): λmax 847 nm/ε = 198400; λmin 775 nm/ε = 22000 ("Fenster").

Anwendungsbeispiele:

Beispiel C1 (Nichtlöschbares System):

Die Verbindung gemäss Beispiel B4 wird in Dimethylformamid gelöst. Darauf wird diese Farbstofflösung in ein Zweikomponenten-Epoxyharz (65 Gewichtsteile glycidylierter Phenol-Novolak und 35 Gewichtsteile 1,4-Butandioldiglycidylether, Härter: 55 Gewichtsteile Bis(3-methyl-4-aminocyclohex-1-yl)methan, 40 Gewichtsteile Isophorondiamin, 3,5 Gewichtsteile 1,3,5-Tris(dimethylaminomethyl)-phenol, 1,5 Gewichtsteile Salicylsäure) (Glasumwandlungstemperatur-Bereich: 94-110°C) unter Verwendung eine Ultraschallbades 5 Minuten lang gemischt und gelöst. Die Losung wird mittels eines Schleuderbeschichters auf ein Glassubstrat aufgebracht und anschliessend bei 40°C unter Vakuum zwei Stunden lang getrocknet. Danach wird diese Schicht bei 80°C 8 Stunden lang erwärmt und vernetzt. Das Absorptionsmaximum liegt bei 845 nm. Die Farbstoffkonzentration beträgt 0,3 Gew.-%. Die Schichtdicke beträgt etwa 1 µm. Auf diese Schicht wird Aluminium mit einer Schichtdicke von etwa 1500 Å aufgedampft. Die Aufzeichnungsschicht wird mit einer Laserdiode von 830 nm punktweise belichtet. Die resultierende Reflexionsänderung wird bei einer gleichen Wellenlänge mittels eines Mikroskop-Spektrophotometers (USMP 80 von Carl Zeiss) gemessen. Die Reflexion nimmt infolge der Lasermarkierung von 70 % auf 35 % ab.

Beispiel C2 (Löschbares System):

Aluminium wird unter Vakuum auf ein Glassubstrat aufgedampft (Schichtdicke von etwa 3000 Å). Darauf wird eine Ausdehnungsschicht aus einem Zweikomponenten-Epoxyharz(55 Gewichtsteile epoxidiertes Bisphenol-A, 45 Gewichtsteile Polypropylenglykoldiglycidylether, Härter: 70 Gewichtsteile Reaktionsprodukt von 7 Gewichtsteilen 1 ,4-Butandioldiglycidylether mit 58 Gewichtsteilen dimerisierter $C_{18}$-Fettsäure und 35 Gewichtsteilen Hexahydrophthalsäureanhydrid sowie 30 Gewichtsteilen n-Dodecylbernsteinsäureanhydrid, unter Zusatz katalytischer Mengen Dimethylbenzylamin) (Glastemperatur-Bereich bei -19 bis 0 °C) und einem Kupferphthalocyanin (substituiert mit 2,5-$SO_3H$ und 1,5-$SO_2NHC_6H_4$-$CONHCH_2CH_2SO_2CH_2CH_2OSO_3H$) aufgebracht. Die Schichtherstellung wird wie in Beispiel C1 vorgenommen, ausser den Bedingungen der Vorheizung (bei 60 °C eine Stunde lang) und der Vernetzung (bei 120 °C eine Stunde lang). Das Absorptionsmaximum liegt bei 676 nm. Die Schichtdicke beträgt etwa 1,2 µm. Anschliessend wird die Retentionsschicht aufgetragen, welche aus dem NIR-Farbstoff gemäss Beispiel B5 und dem gleichen Epoxyharz wie in Beispiel C1 besteht. Die Schichtherstellung und Vernetzungsbedingungen sind wie in Beispiel C14Das Absorptionsmaximum des NIR-Farbstoffes im Polymer liegt bei 858 nm. Die Konzentration des Farbstoffes im Polymer ist 0,25 Gew.-%. Die Schichtdicke beträgt etwa 0,8 µm. Die Aufzeichnungsschicht wird mit einem Farbstofflaser (Farbstoff: Cresyl violet (670 nm)) punktweise belichtet. Die resultierende Reflexionsänderung wird bei 780 nm mittels eines Mikroskop-Spektrometers (siehe Beispiel C1) gemessen. Es wird eine Reflexionsabnahme von 55 % auf 30 % infolge der Lasermarkierung beobachtet. Die gespeicherte Information wird dann unter Verwendung eines Blitzlichts integral gelöscht. Das Verfahren zum Schreiben, Lesen und Löschen wird 30mal wiederholt, wobei keine nennenswerte Verminderung der Reflexionsabnahme beobachtet wird.

**Patentansprüche**

**1.** Verbindungen der Formel I

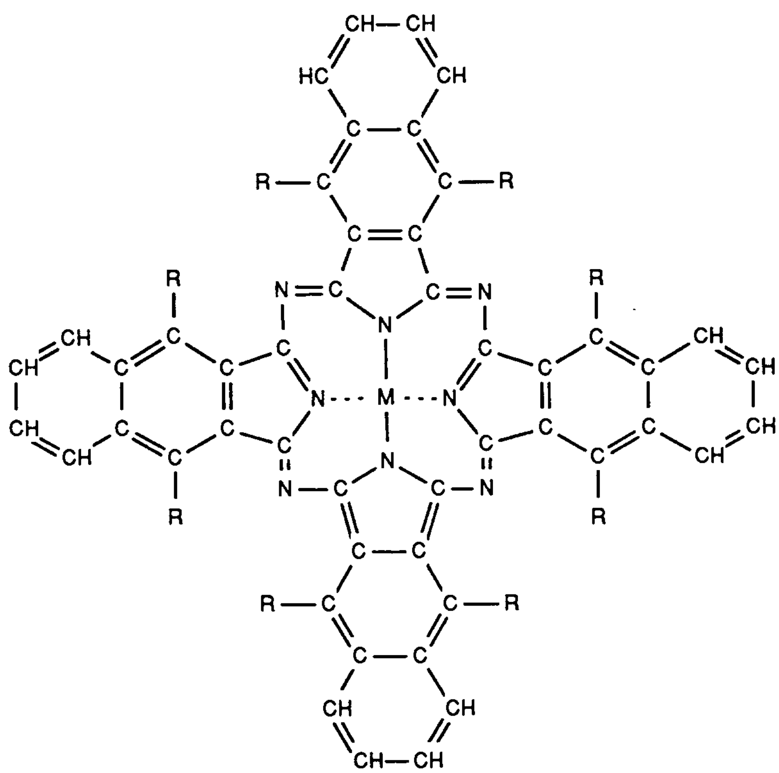

(I),

worin R die Gruppe

$$-(OC_mH_{2m})_n-R_1$$

darstellt und M für zwei H oder für Cu oder Ni steht, $R_1$ -OH, -Cl, -Br, $C_1$-$C_{30}$-Alkoxy oder -OC(O)$R_2$ bedeutet, m für eine ganze Zahl von 2 bis 6 und n für eine Zahl von 1 bis 20 stehen, und $R_2$ $C_1$-$C_{20}$-Alkyl, $C_2$-$C_{20}$-Alkenyl, Cyclopentyl, Cyclohexyl, unsubstituiertes oder mit $C_1$-$C_{18}$-Alkyl substituiertes $C_6$-$C_{10}$-Aryl oder $C_6$-$C_{10}$-Arylmethyl ist.

**2.** Verbindungen gemäss Anspruch 1, worin in Formel I M für Ni steht.

**3.** Verbindungen gemäss Anspruch 1, worin m für eine ganze Zahl von 2 bis 4 steht.

**4.** Verbindungen gemäss Anspruch 3, worin m für 2 oder 3 steht.

**5.** Verbindungen gemäss Anspruch 1, worin n für eine Zahl von 1 bis 10 steht.

**6.** Verbindungen gemäss Anspruch 1, worin R in Formel I die Gruppe

$$-(OCH_2\text{-}CH_2)_m-R_1$$

bedeutet, worin m für eine ganze Zahl von 1 bis 20 steht und $R_1$ die in Anspruch 1 angegebenen Bedeutungen hat.

**7.** Verbindungen gemäss Anspruch 1, worin $R_1$-OH, $C_1$-$C_{18}$-Alkoxy oder -OC(O)-$R_2$ bedeutet, und $R_2$ $C_1$-$C_{18}$-Alkyl, Phenyl, Benzyl, $C_1$-$C_{12}$-Alkylphenyl oder $C_1$-$C_{12}$-Alkylbenzyl darstellt.

**8.** Verbindungen gemäss Anspruch 7, worin $R_1$ -OH oder $C_1$-$C_{12}$-Alkoxy darstellt und $R_2$ $C_1$-$C_{12}$-Alkyl ist.

**9.** Verbindungen gemäss Anspruch 1, worin R in Formel I die Gruppe

$$-(OCH_2\text{-}CH_2)_n-R_1$$

bedeutet, worin n eine Zahl von 1 bis 5 ist und $R_1$ für $C_1$-$C_{12}$-Alkoxy steht.

**10.** Verbindungen gemäss Anspruch 9, worin n eine Zahl von 1 bis 3 ist und $R_1$ für $C_1$-$C_4$-Alkoxy steht.

**11.** Verfahren zur Herstellung von Verbindungen der Formel I gemäss Anspruch 1, bei dem man
a) eine Verbindung der Formel II

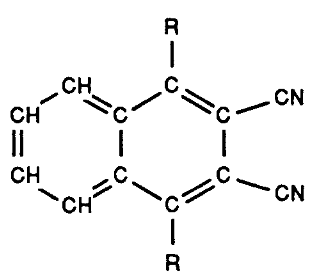

(II),

worin R die in Anspruch 1 angegebenen Bedeutungen hat, bei erhöhter Temperatur in einem Lösungsmittel RH und in Gegenwart einer mindestens äquimolaren Menge eines Lithiumsalzes LiR umsetzt, danach durch Hydrolyse die Verbindung der Formel I freisetzt, worin M für zwei H steht, und diese Verbindung der Formel I isoliert, und gegebenenfalls
b) die nach Stufe a) hergestellte Verbindung in Gegenwart eines Lösungsmittels mit einer mindestens äquimolaren Menge eines Metallsalzes $MX_2$ umsetzt, wobei M für Cu oder Ni steht und X das Anion einer monobasischen Säure ist.

**12.** Zusammensetzung, enthaltend

a) ein Substrat und

b) in gleichmässiger Verteilung oder auf mindestens einer Oberfläche mindestens eine Verbindung der Formel I gemäss Anspruch 1.

**13.** Zusammensetzung gemäss Anspruch 12, worin die Verbindung der Formel I in einer Menge von 0,001 bis 10 Gew.-% enthalten ist, bezogen auf das Substrat.

**14.** Zusammensetzung gemäss Anspruch 12, worin das Substrat ein ein thermoplastischer, thermisch vernetzter oder strukturell vernetzter Kunststoff ist.

**15.** Verbindungen der Formel II

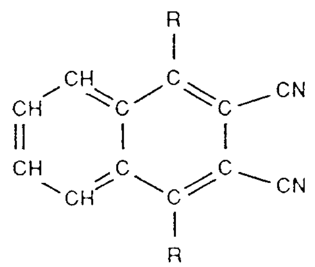

(II),

worin R die Gruppe

$$-(OC_mH_{2m})_n-R_1$$

darstellt,

$R_1$ -OH,-Cl, -Br, $C_1$-$C_{30}$-Alkoxy oder -OC(O)$R_2$ bedeutet,

m für eine ganze Zahl von 2 bis 6 und n für eine Zahl von 1 bis 20 stehen, und $R_2$ $C_1$-$C_{20}$-Alkyl, $C_2$-$C_{20}$-Alkenyl, Cyclopentyl, Cyclohexyl, unsubstituiertes oder mit $C_1$-$C_{18}$-Alkyl substituiertes $C_6$-$C_{10}$-Aryl oder $C_6$-$C_{10}$-Arylmethyl ist.

**16.** Verwendung einer Zusammensetzung gemäss Anspruch 12 als optisches Informationsaufzeichnungsmaterial durch Markierung mit Lasern.

## Claims

1. A compound of the formula I

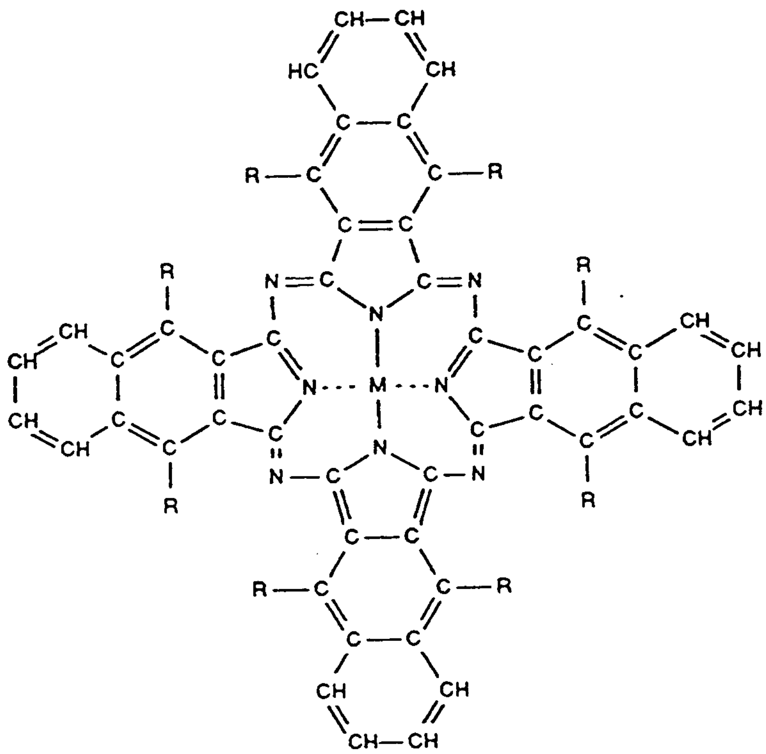

(I),

in which R is the group

$$-(OC_mH_{2m})_n-R_1$$

and M is two H or is Cu or Ni, $R_1$ is -OH, -Cl, -Br, $C_1$-$C_{30}$alkoxy or -OC(O)$R_2$, m is an integer from 2 to 6 and n is a number from 1 to 20, and $R_2$ is $C_1$-$C_{20}$alkyl, $C_2$-$C_{20}$alkenyl, cyclopentyl, cyclohexyl or $C_6$-$C_{10}$aryl or $C_6$-$C_{10}$arylmethyl which is unsubstituted or substituted by $C_1$-$C_{18}$alkyl.

2. A compound according to claim 1, in which M in formula I is Ni.

3. A compound according to claim 1, in which m is an integer from 2 to 4.

4. A compound according to claim 3, in which m is 2 or 3.

5. A compound according to claim 1, in which n is a number from 1 to 10.

6. A compound according to claim 1, in which R in formula I is the group

$$-(OCH_2-CH_2)_m-R_1,$$

in which m is an integer from 1 to 20 and $R_2$ is as defined in claim 1.

7. A compound according to claim 1, in which $R_1$ is -OH, $C_1$-$C_{18}$alkoxy or -OC(O)-$R_2$ and $R_2$ is $C_1$-$C_{18}$alkyl, phenyl, benzyl, $C_1$-$C_{12}$alkylphenyl or $C_1$-$C_{12}$alkylbenzyl.

**8.** A compound according to claim 7, in which $R_1$ is -OH or $C_1$-$C_{12}$alkoxy and $R_2$ is $C_1$-$C_{12}$alkyl.

**9.** A compound according to claim 1, in which R in formula I is the group

$$-(OCH_2-CH_2)_n-R_1,$$

in which n is a number from 1 to 5 and $R_1$ is $C_1$-$C_{12}$alkoxy.

**10.** A compound according to claim 9, in which n is a number from 1 to 3 and $R_1$ is $C_1$-$C_4$alkoxy.

**11.** A process for the preparation of a compound of the formula I according to claim 1, which comprises
a) reacting a compound of the formula II

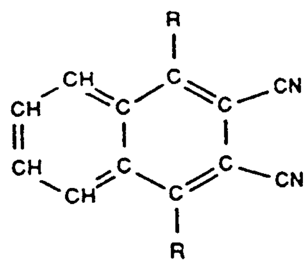

(II),

in which R is as defined in claim 1, at elevated temperature in a solvent RH and in the presence of at least the equimolar amount of a lithium salt LiR, subsequently liberating the compound of the formula I in which M is two H by hydrolysis, isolating this compound of the formula I and if appropriate
b) reacting the compound prepared according to stage a) with at least the equimolar amount of a metal salt $MX_2$, in which M is Cu or Ni and X is the anion of a monobasic acid, in the presence of a solvent.

**12.** A composition containing
a) a substrate and
b) at least one compound of the formula I according to claim 1 in uniform distribution or on at least one surface.

**13.** A composition according to claim 12, which contains the compound of the formula I in an amount of 0.001 to 10 % by weight, based on the substrate.

**14.** A composition according to claim 12, in which the substrate is a thermoplastic or a thermally crosslinked or structurally crosslinked plastic.

**15.** A compound of the formula II

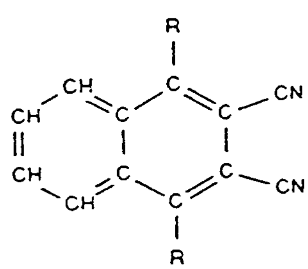

(II),

in which R is the group

$$-(OC_mH_{2m})_n-R_1,$$

$R_1$ is -OH, -Cl, -Br, $C_1$-$C_{30}$alkoxy or -OC(O)$R_2$, m is an integer from 2 to 6 and n is a number from 1 to 20, and $R_2$ is $C_1$-$C_{20}$alkyl, $C_2$-$C_{20}$alkenyl, cyclopentyl, cyclohexyl or $C_6$-$C_{10}$aryl or $C_6$-$C_{10}$arylmethyl which is unsubstituted or substituted by $C_1$-$C_{10}$alkyl.

**16.** The use of a composition according to claim 12 as an optical information recording material by marking with lasers.

**Revendications**

**1.** Composés de formule I

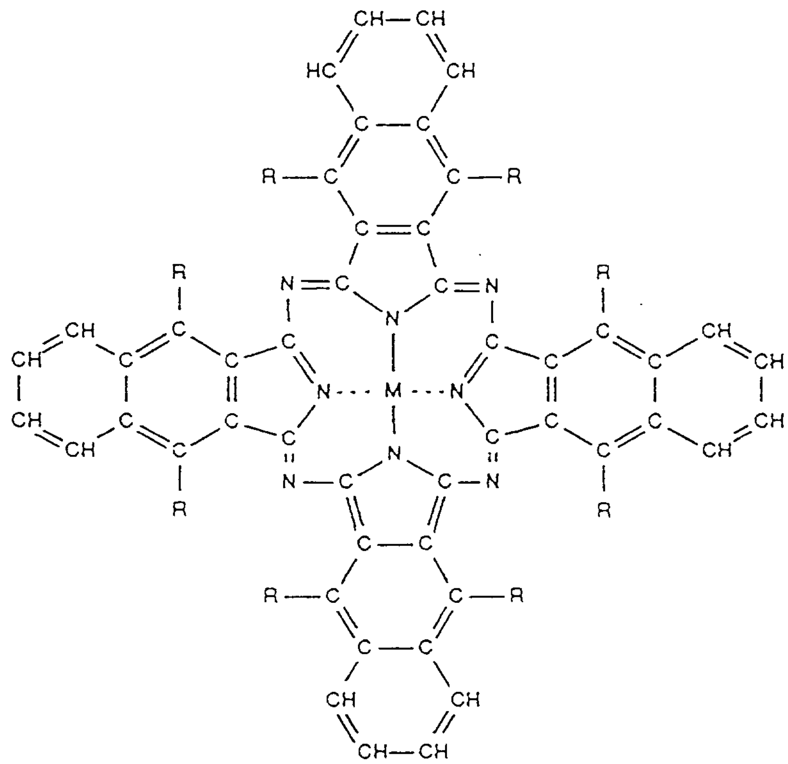

(I),

dans laquelle
R est le groupe -$(OC_mH_{2m})_n$-$R_1$, et M représente deux hydrogènes ou encore Cu ou Ni,
$R_1$ est -OH, -Cl, -Br, ou un radical alcoxy en $C_1$-$C_{30}$ ou -OC(O)$R_2$,
m est un nombre entier de 2 à 6, et n est un nombre de 1 à 20, et
$R_2$ est un radical alkyle en $C_1$-$C_{20}$, alcényle en $C_2$-$C_{20}$, cyclopentyle, cyclohexyle, aryle en $C_6$-$C_{10}$ ou arylméthyle en $C_6$-$C_{10}$ non substitué, ou substitué par des substituants alkyle en $C_1$-$C_{18}$.

**2.** Composés selon la revendication 1, dans lesquels, dans la formule I, M est Ni.

**3.** Composés selon la revendication 1, dans lesquels m est un nombre entier de 2 à 4.

**4.** Composés selon la revendication 3, dans lesquels m vaut 2 ou 3.

**5.** Composés selon la revendication 1, dans lesquels n est un nombre de 1 à 10.

**6.** Composés selon la revendication 1, dans lesquels R, dans la formule I, est le groupe -$(OCH_2$-$CH_2)_m$-$R_1$, où m est un entier de 1 à 10 et $R_1$ a les significations données dans la revendication 1.

**7.** Composés selon la revendication 1, dans lesquels $R_1$ est -OH ou un radical alcoxy en $C_1$-$C_{18}$ ou -OC-(O)-$R_2$, et $R_2$ est un radical alkyle en $C_1$-$C_{18}$, phényle, benzyle, (alkyle en $C_1$-$C_{12}$)phényle ou (alkyle en $C_1$-$C_{12}$)benzyle.

**8.** Composés selon la revendication 7, dans lesquels $R_1$ est -OH ou un radical alcoxy en $C_1$-$C_{12}$, et $R_2$ est un radical alkyle en $C_1$-$C_{12}$.

**9.** Composés selon la revendication 1, dans lesquels R, dans la formule I, est le groupe $-(OCH_2-CH_2)_n-R_1$, où n est nombre de 1 à 5 et $R_1$ est un radical alcoxy en $C_1$-$C_{12}$.

**10.** Composés selon la revendication 9, dans lesquels n est un nombre de 1 à 3 et $R_1$ est un radical alcoxy en $C_1$-$C_4$.

**11.** Procédé pour préparer des composés de formule I selon la revendication 1, dans lesquels :

a) on fait réagir un composé de formule II

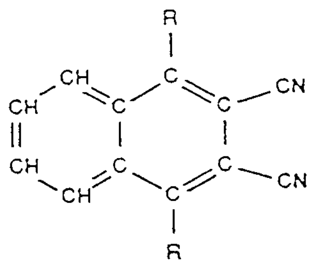

(II),

dans laquelle R a les significations données dans la revendication 1, à haute température et dans un solvant RH et en présence d'une quantité au moins équimolaire d'un sel de lithium LiR, puis, par hydrolyse, on libère le composé de formule I dans laquelle M représente deux hydrogènes, et on isole ce composé de formule I, et éventuellement

b) on fait réagir le composé préparé dans l'étape a), en présence d'un solvant, avec une quantité au moins équimolaire d'un sel métallique $MX_2$, M étant Cu ou Ni, et X étant l'anion d'un monoacide.

**12.** Composition contenant :

a) un substrat, et

b) au moins un composé de formule I selon la revendication 1, selon une répartition uniforme ou sur au moins une surface.

**13.** Composition selon la revendication 12, dans laquelle le composé de formule I est présent, par rapport au substrat, en une quantité de 0,001 à 10 % en poids.

**14.** Composition selon la revendication 12, dans laquelle le substrat est un matériau plastique thermoplastique, à réticulation thermique ou à réticulation structurale.

**15.** Composés de formule II

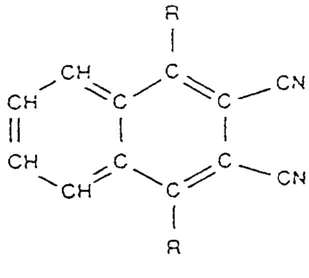

(II),

dans laquelle R est le groupe $-(OC_mH_{2m})_n-R_1$,

$R_1$ est -OH, -Cl, -Br ou un radical alcoxy en $C_1$-$C_{30}$ ou encore $-OC(O)R_2$,

m est un nombre entier de 2 à 6 et n est un nombre de 1 à 20, et

$R_2$ est un radical alkyle en $C_1$-$C_{20}$, alcényle en $C_2$-$C_{20}$, cyclopentyle, cyclohexyle, aryle en $C_6$-$C_{10}$ ou arylméthyle en $C_6$-$C_{10}$ non substitué ou substitué par des substituants alkyle en $C_1$-$C_{18}$.

**16.** Utilisation d'une composition selon la revendication 12 comme matériau d'enregistrement optique d'informations par marquage avec des lasers.